# EUROPEAN PATENT APPLICATION

(11) **EP 1 954 081 A1**
(43) Date of publication of application: **06.08.2008**
(21) Application number: 06822898.0
(22) Date of filing: 02.11.2006
(51) Int. Cl.: H04Q 7/36, H04J 3/16, H04Q 7/38

(54) **PACKET COMMUNICATION METHOD, MOBILE STATION, AND RADIO BASE STATION**

(30) Priority: 04.11.2005 JP 2005321624
(71) Applicant: NTT DoCoMo Inc., Chiyoda-ku Tokyo 100-6150 (JP)
(72) Inventor: ABETA, Sadayuki c/o IP Department, NTT DoCoMo, Inc., Chiyoda-ku, Tokyo 100-6150 (JP); ISHII, Minami c/o IP Department, NTT DoCoMo, Inc., Chiyoda-ku, Tokyo 100-6150 (JP); NAKAMURA, Takehiro c/o IP Department, NTT DoCoMo, Inc., Chiyoda-ku, Tokyo 100-6150 (JP)
(74) Representative: HOFFMANN EITLE
(86) International application number: PCT/JP2006/321980
(87) International publication number: WO 2007/052752

(57) **Abstract**

A packet communication method includes: transmitting, from a mobile station to a radio base station through a random access channel, a random access request; allocating, at a radio base station, a packet access request transmission radio resource for transmitting, at the mobile station, a packet access request for requesting an initiation of a packet communication, from among radio resources allocated to uplink shared channels, in response to a receipt of the random access request; transmitting, at the radio base station, a response for notifying the receipt of the random access request and for notifying the packet access request transmission radio resource, to the mobile station through at least one of a downlink shared data channel and a downlink shared control channel corresponding to the random access channel; and transmitting, at the mobile station, the packet access request by using the packet access request transmission radio resource notified by the response.

## Description

### Technical Field

The present invention relates to packet communication methods, mobile stations, and radio base stations.

### Background Art

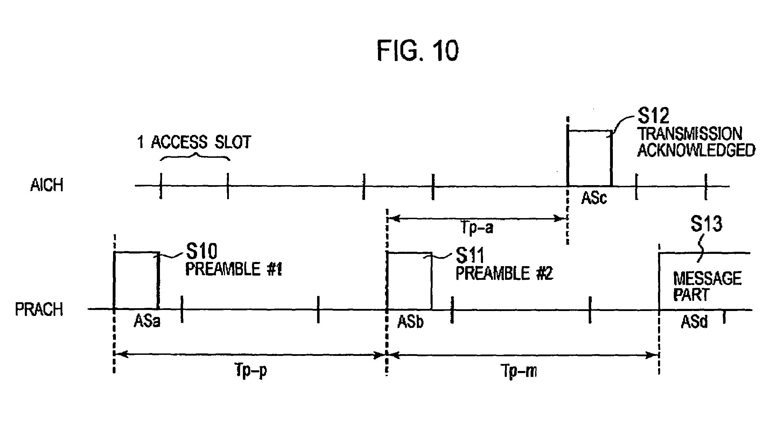

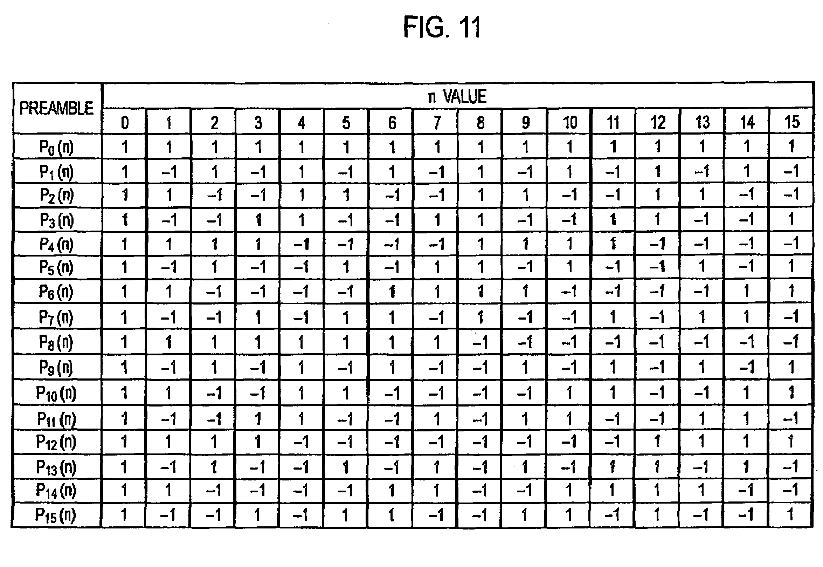

Heretofore, a random access control is performed in the W-CDMA mobile communication system. A description will be given for the random access control with reference to Fig. 10 and Fig. 11.

As shown in Fig. 10, in step S10, a mobile station UE selects an available access slot ASa in a physical random access channel (PRACH), and transmits a preamble #1 in the access slot ASa to a radio base station Node B by using a preamble initial power.

Fig. 11 shows an example of a preamble transmitted through the PRACH. In the example in Fig. 11, the preamble is formed of a 16-bit Hadamard sequence.

Thereafter, since a predetermined time period τ p-p has passed after the transmission of the preamble #1, and an acquisition indicator (AI) of the preamble #1 has not been transmitted to the mobile station UE from the radio base station Node B through an acquisition indicator channel (AICH) corresponding to the PRACH, in step S11, the mobile station UE transmits a preamble #2 in an access slot Asb, to the radio base station Node B. In this regard, the preamble #2 is transmitted by using a preamble power, which is larger, by a certain value, than the preamble initial power.

In step S12, when the radio base station Node B has detected, by using a correlation detection, the preamble #2 transmitted through the PRACH, the radio base station Node B transmits an Al of the preamble #2 in an access slot Asc, to the mobile station UE through the AICH corresponding to the PRACH.

Then, the mobile station UE has received the Al of the preamble #2 from the radio base station Node B through the AICH corresponding to the PRACH, before a predetermined time period τ p-m has passed after the transmission of the preamble #2. Accordingly, in step S13, the mobile station UE transmits a message part (10 ms or 20 ms) in an access slot ASd through the PRACH (or a PRACH corresponding to the said PRACH) by using a transmission power corresponding to the preamble power. In this regard, the mobile station UE transmits the message part in the access slot ASd In which the predetermined time period τp-m has passed after the transmission of the preamble #2.

However, in the random access control in the conventional W-CDMA mobile communication system, the message part (later-mentioned packet access request and the like) is configured to be transmitted through the PRACH (or a PRACH corresponding to the said PRACH) used for receiving the Al and for transmitting the preamble. In other words, the message part is configured to be transmitted through a low-speed common channel. Hence, a problem arises that a transmission rate of the message part is low.
Non-patent Document 1: 3GPP TS25.211
Non-patent Document 2: 3GPP TS25.213

### Disclosure of the Invention

The present invention has been made in view of the above-mentioned problem, and has an object of providing, in an random access control, a packet communication method, a mobile station, and a radio base station, which can increase a transmission rate of a message part (a packet access request), and can reduce a time consumed before an initiation of a transmission.

A first aspect of the present invention is summarized as a packet communication method, including: transmitting, from a mobile station to a radio base station through a random access channel, a random access request; allocating, at a radio base station, a packet access request transmission radio resource for transmitting, at the mobile station, a packet access request for requesting an initiation of a packet communication, from among radio resources allocated to uplink shared channels, in response to a receipt of the random access request; transmitting, at the radio base station, a response for notifying the receipt of the random access request and for notifying the packet access request transmission radio resource, to the mobile station through at least one of a downlink shared data channel and a downlink shared control channel corresponding to the random access channel; and transmitting, at the mobile station, the packet access request by using the packet access request transmission radio resource notified by the response.

In the first aspect of the present invention, the radio base station may be configured to notify, to the mobile station through a broadcast channel, at least one of the random access channel and the downlink shared control channel corresponding to the random access channel.

In the first aspect of the present invention, the radio base station may change at least one of the random access channel to be notified, and the downlink shared control channel corresponding to the random access channel and to be notified, based on a cell, a service class, a purpose, or a reception level.

In the first aspect of the present invention, the mobile station may change configured to change a pattern that constitutes the random access request to be transmitted through the random access channel, based on a cell, a service class, a purpose, or a reception level.

A second aspect of the present invention is summarized as a mobile station, including: a random access request transmitter unit configured to transmit a random access request to a radio base station through a random access channel; a response receiver unit configured to receive, from the radio base station, a response for notifying a receipt of the random access request, and for notifying a packet access request transmission radio resource for transmitting a packet access request for requesting an initiation of a packet communication, through at least one of a downlink shared data channel and a downlink shared control channel corresponding to the random access channel; and a packet access request transmitter unit configured to transmit the packet access request by using the packet access request transmission radio resource notified by the response received at the response receiver unit.

in the second aspect of the present invention, at least one of the random access channel and the downlink shared control channel corresponding to the random access channel, may be notified through a broadcast channel transmitted from the radio base station.

In the second aspect of the present invention, the random access request transmitter unit may change the pattern that constitutes the random access request to be transmitted through the random access channel, based on a cell, a service class, a purpose, or a reception level,

A third aspect of the present invention is summarized as a radio base station, including: a random access request receiver unit configured to receive a random access request from a mobile station through a random access channel; an allocation unit configured to allocate, at the mobile station, a packet access request transmission radio resource for transmitting a packet access request for requesting an initiation of a packet communication, from among radio resources allocated to uplink shared channels, in response to a receipt of the random access request; and a response transmitter unit configured to transmit, to the mobile station, a response for notifying the receipt of the random access request, and for notifying the packet access request transmission radio resource, through at least one of a downlink shared data channel and a downlink shared control channel corresponding to the random access channel.

In the third aspect of the present invention, the radio base station may further include a notification unit configured to notify, to the mobile station through a broadcast channel, at least one of the random access channel and the downlink shared control channel corresponding to the random access channel,

In the third aspect of the present invention, the notification unit may change at least one of the random access channel to be notified and the downlink shared control channel corresponding to the random access channel and to be notified, based on a cell, a service class, a purpose, or a reception level.

### Brief Descriptions of the Drawings

[Fig. 1] Fig. 1 is an overall configuration diagram of a mobile communication system according to a first embodiment of the present invention.
[Fig. 2] Fig. 2 is a functional block diagram of a mobile station according to the first embodiment of the present invention.
[Fig. 3] Fig. 3 is a functional block diagram of a radio base station according to the first embodiment of the present Invention.
[Fig. 4] Fig. 4 is a diagram illustrating an exemplar allocation of an uplink radio resource in the mobile communication system according to the first embodiment of the present invention.
[Fig. 5] Fig. 5 is a diagram illustrating an exemplar allocation of the uplink radio resource in the mobile communication system according to the first embodiment of the present invention.
[Fig. 6] Fig. 6 is a diagram illustrating an exemplar allocation of the uplink radio resource in the mobile communication system according to the first embodiment of the present invention.
[Fig. 7] Fig. 7 is a diagram illustrating an exemplar allocation of a downlink radio resource in the mobile communication system according to the first embodiment of the present invention.
[Fig. 8] Fig. 8 is a sequence diagram illustrating a first operation of the mobile communication system according to the first embodiment of the present invention.
[Fig. 9] Fig. 9 is a sequence diagram Illustrating a second operation of the mobile communication system according to the first embodiment of the present invention.
[Fig. 10] Fig. 10 is a sequence diagram illustrating an operation of a mobile communication system according to a conventional technique.
[Fig. 11] Fig. 11 is a diagram illustrating an example of a PRACH format used in the mobile communication system according to the conventional technique.

### Best Mode for Carrying out the Invention

### (A mobile communication system according to a first embodiment of the present invention)

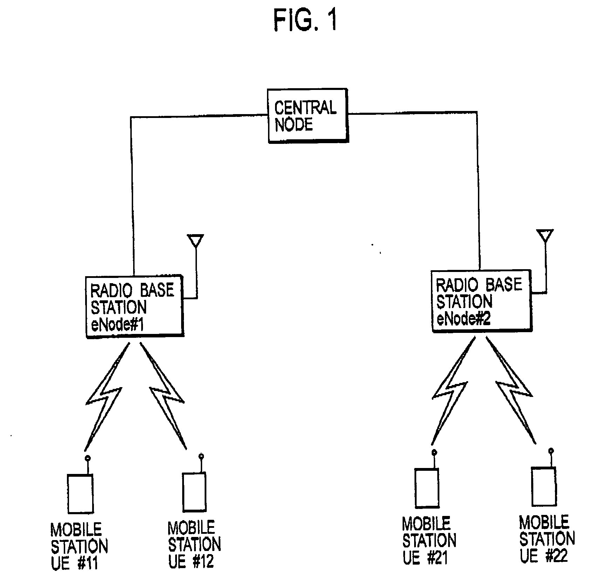

A configuration of a mobile communication system according to a first embodiment of the present invention will be described with reference to Figs. 1 to 3.

As shown in Fig. 1, the mobile communication system according to the present embodiment includes a plurality of radio base stations; radio base stations eNodeB #1 and eNodeB #2, and a central node (such as an access router, a radio network controller RNC or the like) that controls the plurality of radio base stations eNodeB #1 and eNodeB #2.

In the mobile communication system according to the present embodiment, each of a mobile station UE is configured to initiate a packet communication by a random access control, through a radio base station eNodeB and the central node, Here, the radio base station eNodeB controls a cell in which the mobile station UE is located.

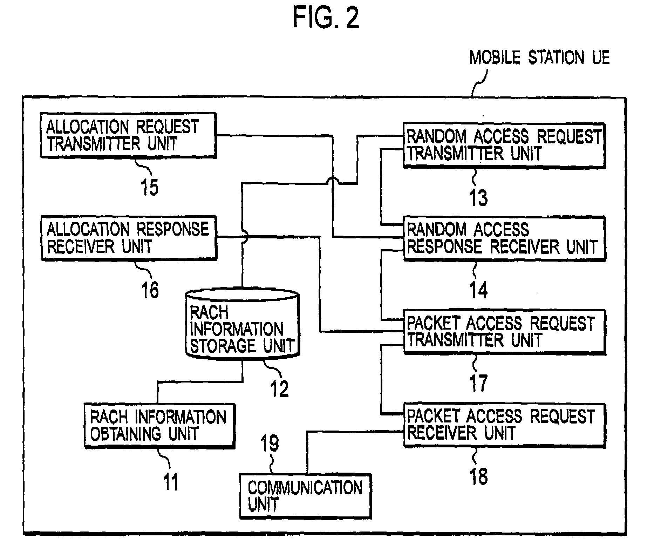

As shown in Fig. 2, the mobile station UE is provided with a RACH information obtaining unit 11, a RACH information storage unit 12, a random access request transmitter unit 13, a random access response receiver unit 14, an allocation request transmitter unit 15, an allocation response receiver unit 16, a packet access request transmitter unit 17, a packet access response receiver unit 18, and a communication unit 19.

The RACH information obtaining unit 11 is configured to obtain RACH information and to store the obtained RACH information in the RACH information storage unit 12. Here, the RACH information is notified through a downlink shared channel allocated to the mobile station UE or a broadcast channel transmitted from a cell in which the mobile station UE is located.

As the broadcast channel, such as a broadcast channel (BCH) defined in 3GPP, or the like can be assumed.

As the downlink shared channel, such as a downlink shared control channel or a downlink shared data channel or the like can be assumed.

Additionally, the RACH information obtaining unit 11 is configured to obtain, as a part of the RACH information, information for identifying a random access channel, or the like.

Moreover, the RACH information obtaining unit 11 may be configured to obtain, as a part of the RACH information, information for identifying a downlink shared control channel corresponding to the random access channel or a downlink shared data channel.

Here, as a random access channel (RACH) defined in 3GPP or the like can be assumed to be the random access channel, which is an uplink shared channel. Accordingly, the random access channel will be described as "RACH" hereinbelow.

Specifically, the RACH information includes information for specifying a radio resource allocated to the RACH or to the downlink shared control channel corresponding to the RACH.

Here, it is assumed that the information for specifying the radio resource specifies: a frequency resource (frequency band), a time resource (time slot or TTI), a code resource (spread code), or a combination of the above-described resources.

Further, the RACH information may include multiple pieces of information for specifying the above-described radio resources.

In addition, in the mobile communication system according to the present embodiment, the radio resource allocated to the RACH or to the downlink shared control channel corresponding to the RACH may be predetermined.

Note that a random access response is transmitted through at least one of the downlink shared data channel and the downlink shared control channel corresponding to the RACH. Here, the random access response notifies, to the mobile station UE, the receipt of the random access request transmitted through the RACH, and a packet access request transmission radio resource (to be described later).

The random access request transmitter unit 13 is configured to refer to the RACH information storage unit 12, and to transmit, through the RACH, a random access request (corresponding to the preamble, for example) to the radio base station eNodeB that controls the cell in which the mobile station UE is located.

For instance, the random access request may be formed of a 16-bit Hadamard sequence (see Fig. 11). Otherwise, the random access request may be formed to add information, such as predetermined priority information, to the 16-bit Hadamard sequence.

Moreover, the random access request transmitter unit 13 may be configured to change, by using an arbitrary method, the RACH used for transmitting the random access request, when the RACH information storage unit 12 stores a plurality of the information for identifying the RACH or the downlink shared control channel corresponding to the RACH.

The random access request transmitter unit 13 may be configured to change the RACH used for transmitting the random access request or a pattern constituting the random access request (such as the 16-bit Hadamard sequence shown in Fig. 11), based on a service class, a cell, or a purpose,

In other words, the random access request transmitter unit 13 may be configured to change the RACH used for transmitting the random access request or the pattern constituting the random access request, depending on the purpose of transmitting the random access request.

Further, the random access request transmitter unit 13 may be configured to change the RACH used for transmitting the random access request or the pattern constituting the random access request, depending on a reception level measured in the downlink.

The random access request transmitter unit 13 may change the RACH for transmitting the random access request or the pattern constituting the random access request, depending on the purpose of the transmission, such as; a random access request transmitted when a handover is performed; a random access request transmitted for establishing a radio link between the mobile station UE and the radio base station eNodeB; and a random access request transmitted for adjusting a timing in the radio link established between the mobile station UE and the radio base station eNodeB,

For example, the random access request transmitter unit 13 may use, as a pattern for the random access request transmitted when the handover is performed, the Hadamard sequences of P₀(n) to P₂(n), as shown in Fig. 11. Further, the random access request transmitter unit 13 may use, as a pattern for the random access request transmitted for establishing the radio link between the mobile station UE and the radio base station eNodeB, the Hadamard sequences P₃(n) to P₅(n) as shown in Fig. 11. In addition, the random access request transmitter unit 13 may use, as a pattern for the random access request transmitted for adjusting the timing in the radio link established between the mobile station UE and the radio base station eNodeB, the Hadamard sequences P₃(n) to P₅(n) shown in Fig. 11

The random access response receiver unit 14 is configured to receive, from the radio base station eNodeB, the random access response for notifying the receipt of the random access request, and for notifying the packet access request transmission radio resource, through at least one of the downlink shared control channel corresponding to the RACH used for transmitting the random access request, and the downlink shared data channel.

Note that the random access response may be configured to notify the radio resource in the uplink shared channel to be used for transmitting the packet access request (corresponding to the message part, for example) which requests an initiation of a packet communication (that is, the packet access request transmission radio resource).

In other words, the random access response may be configured to include information for specifying the packet access request transmission radio resource.

Further, the random access response receiver unit 14 may be configured to obtain, from the downlink shared control channel corresponding to the RACH, information for specifying the downlink shared data channel that includes the random access response for notifying the packet access request transmission radio resource,

In addition, the random access response may be configured to include the information for identifying the RACH corresponding to the downlink shared control channel or the downlink shared data channel.

Moreover, the random access response may be configured to include a transmission timing in the uplink channel, or information for identifying the mobile station UE in each of the radio base stations eNodeB.

The allocation request transmitter unit 15 is configured to transmit an allocation request for requesting the radio base station eNodeB to allocate and notify the packet access request transmission radio resource to the mobile station UE, when the random access response does not include the information for identifying the packet access request transmission radio resource.

The allocation response receiver unit 16 is configured to receive an allocation response transmitted from the radio base station eNodeB in response to the allocation request. Note that the allocation response includes information for specifying the allocated packet access request transmission radio resource.

The packet access request transmitter unit 17 is configured to transmit, to the central node, the packet access request for requesting an initiation of the packet communication. The packet access request is transmitted by using the packet access request transmission radio resource in the uplink shared channel, which is notified by the random access response received at the random access response receiver unit 14.

Further, the packet access request transmitter unit 17 is configured to transmit the packet access request for requesting the initiation of the packet communication. The packet access request is transmitted by using the packet access request transmission radio resource in the uplink shared channel, which is notified by the random access response received at the allocation response receiver unit 16.

For example, the packet access request includes an authentication code of the mobile station UE, information for identifying a performance of the mobile station UE, a security code in the radio uplink, a service ID, and the like, It may be configured such that part of the information included in the packet access request is terminated at the radio base station eNodeB, and the rest of the information is terminated at the central node.

The packet access response receiver unit 18 is configured to receive a packet access response transmitted from the central node in response to the packet access request.

When the packet access response is received at the packet access response receiver unit 18, the communication unit 19 is configured to set a link for transmitting and receiving user data (U-plane) between the mobile station UE and the central node, and to perform a communication through the link.

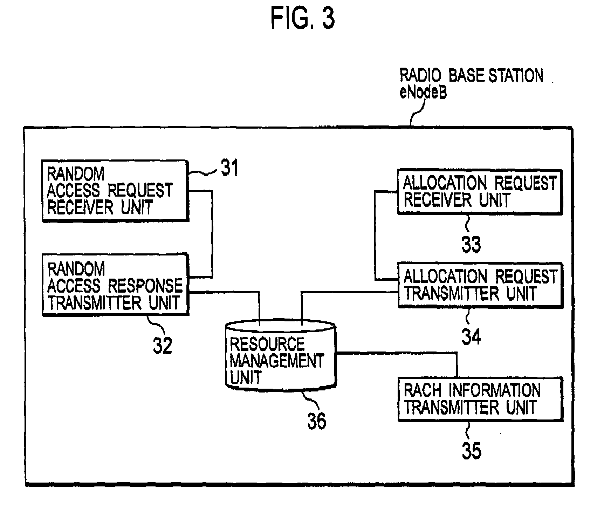

As shown in Fig. 3, the radio base station eNodeB is provided with a random access request receiver unit 31, a random access response transmitter unit 32, an allocation request receiver unit 33, an allocation response transmitter unit 34, a RACH information transmitter unit 35, and a resource management unit 36.

The random access request receiver unit 31 is configured to receive the random access request from the mobile station UE through the RACH.

The random access response transmitter unit 32 is configured to refer to the resource management unit 36, and to transmit the random access response for notifying the receipt of the random access request, to the mobile station UE through at least one of the downlink shared control channel corresponding to the RACH used for receiving the random access request, and the downlink shared data channel.

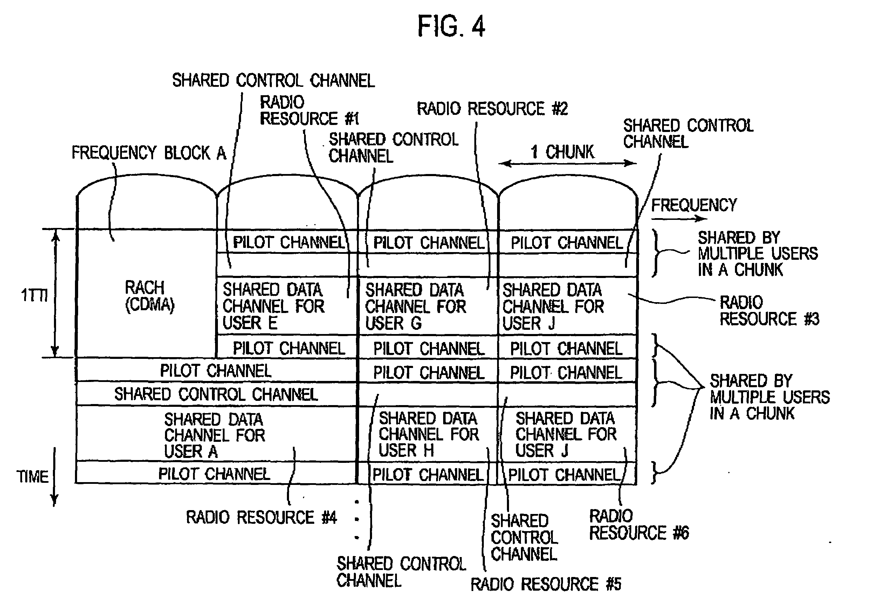

Further, in response to the receipt of the random access request at the random access request receiver unit 31, the random access response transmitter unit 32 may be configured to refer to the resource management unit 36, and to allocate the packet access request transmission radio resource for transmitting, at the mobile station UE, the packet access request for requesting the initiation of the packet communication, from among radio resources allocated to the uplink shared channels (such as shared data channels in the uplink as shown in Figs. 4 to 6).

Here, the random access response transmitter unit 32 may be configured to allocate the packet access request transmission radio resource, based on priority information included in the random access request.

In that case, the random access response transmitter unit 32 is configured to notify the allocated packet access request transmission radio resource, to mobile station UE by the random access response.

Specifically, the random access response transmitter unit 32 is configured to transmit, to the mobile station UE, the random access response including information for specifying the allocated packet access request transmission radio resource.

For example, the random access response transmitter unit 32 may be configured to notify, to the mobile station UE, information for specifying the downlink shared data channel that includes the random access response for notifying the packet access request transmission radio resource, by using the downlink shared control channel corresponding to the RACH used for receiving the random access request. The random access response transmitter unit 32 may be configured to then notify, to the mobile station, the packet access request transmission radio resource, through the downlink shared data channel.

The allocation request receiver unit 33 is configured to receive, from the mobile station UE, the allocation request for requesting the allocation and notification of the packet access request transmission radio resource, through a predetermined channel (such as the RACH or the uplink shared control channel).

In response to the receipt of the random access request at the allocation request receiver unit 33, the allocation response transmitter unit 34 may be configured to refer to the resource management unit 36, and to allocate the packet access request transmission radio resource for transmitting, at the mobile station UE, the packet access request for requesting the initiation of the packet communication, from among radio resources allocated to the uplink shared channels (such as shared data channels in the uplink as shown in Figs. 4 to 6).

Here, the allocation response transmitter unit 34 may be configured to allocate the packet access request transmission radio resource, based on priority information included in the allocation request.

Further, when the allocation response transmitter unit 34 receives the allocation request from the mobile station UE, the allocation response transmitter unit 34 is configured to notify the allocated packet access request transmission radio resource, to the mobile station UE by the allocation response.

Specifically, the allocation response transmitter unit 34 is configured to transmit, to the mobile station UE, the allocation response including the information for specifying the allocated packet access request transmission radio resource.

The RACH information transmitter unit 35 is configured to refer to the resource management unit 36, and to notify the RACH to the mobile station UE through the broadcast channel.

Further, the RACH information transmitter unit 35 may be configured to refer to the resource management unit 36, and to notify the downlink shared control channel corresponding to the RACH or the downlink shared data channel, to the mobile station UE through the broadcast channel.

Specifically, the RACH information transmitter unit 35 is configured to refer to the resource management unit 36; and to transmit, to the mobile station UE through the broadcast channel, the RACH information including the information for specifying the RACH, or the downlink shared data channel or the downlink shared control channel corresponding to the RACH.

Note that the RACH information transmitter unit 35 may be configured to change the RACH information to be notified to the mobile station UE (such as the RACH, the downlink shared control channel corresponding to the RACH, and the downlink shared data channel), based on a cell, a service class, or a purpose.

Further, the RACH information transmitter unit 35 may be configured to change the RACH information to be notified to the mobile station UE (such as the RACH, the downlink shared control channel corresponding to the RACH, and the downlink shared data channel) at a predetermined timing, depending on a traffic situation, a radio communication situation or the like.

The resource management unit 36 is configured to control each of the radio resources (a frequency resource, a time resource, and a code resource) allocated to respective channels in the uplink and the downlink. For instance, the resource management unit 36 is configured to control the radio resource allocated to the RACH and to the downlink shared control channel corresponding to the RACH.

Figs. 4 to 7 show examples of the radio resources allocated by the resource management unit 36 to the respective channels in the uplink and the downlink.

Here, the examples shown in Figs. 4 to 6 are configured such that the RACH is allocated in a frequency block A.

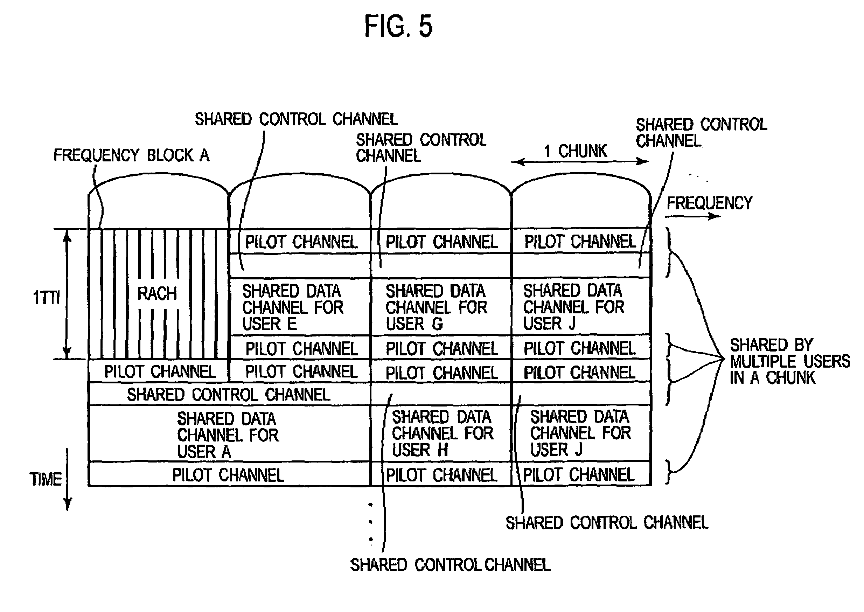

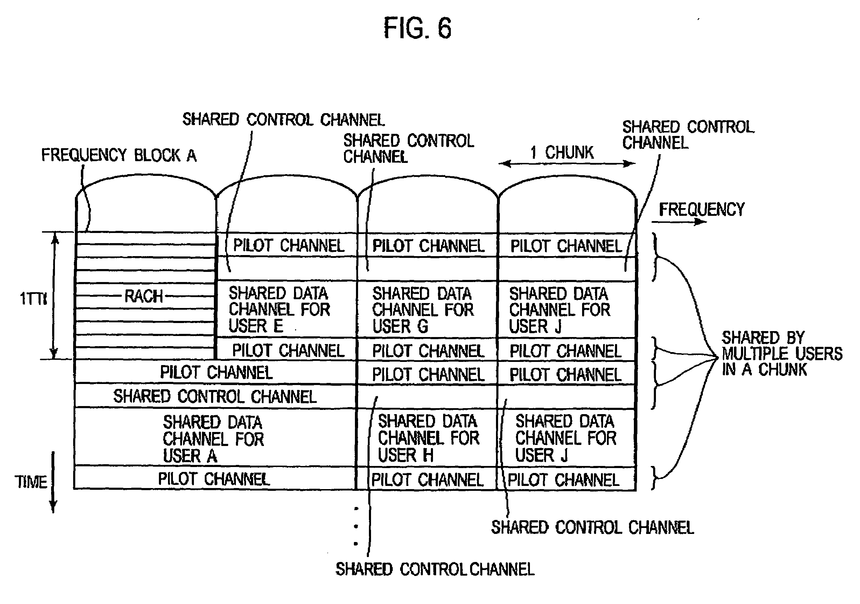

Note that in the example of Fig. 4, multiple RACHs are multiplexed by code division multiple access (CDMA) in the frequency block A, while in the example in Fig. 5, multiple RACHs are multiplexed by frequency division multiple access (FDMA) in the frequency block A, and in the example in Fig. 6, multiple RACHs are multiplexed by time division multiple access (TDMA) in the frequency block A.

Moreover, in the example in Fig. 4, at a certain timing (a TTI, for example), the radio resource # 1 is allocated as a packet access request transmission radio resource for transmitting a packet access request at a mobile station (user) E from among radio resources #1 to #6 allocated to the uplink shared data channel (uplink shared channel). Further, the radio resource # 2 is allocated as a packet access request transmission radio resource for transmitting the packet access request at a mobile station (user) G. In addition, the radio resources # 3 to #6 are allocated as a packet access request transmission radio resource for transmitting the packet access request at a mobile station (user) J. Moreover, the radio resource # 4 is allocated as a packet access request transmission radio resource for transmitting the packet access request at a mobile station (user) A. Furthermore, the radio resource # 5 is allocated as a packet access request transmission radio resource for transmitting the packet access request at a mobile station (user) H.

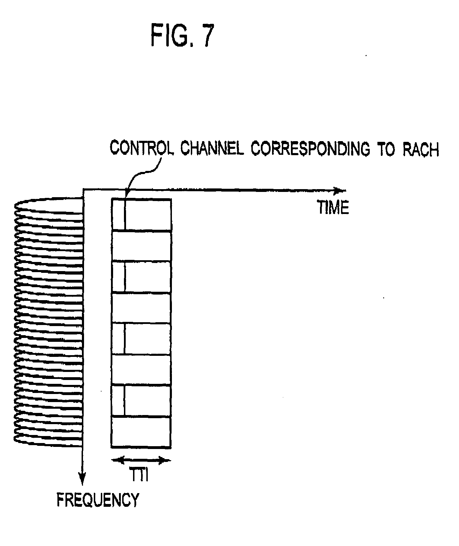

Moreover, as shown in Fig. 7, a predetermined radio resource is allocated to a downlink shared control channel corresponding to a specific RACH.

### (Operation of the mobile communication system according to the first embodiment of the present invention)

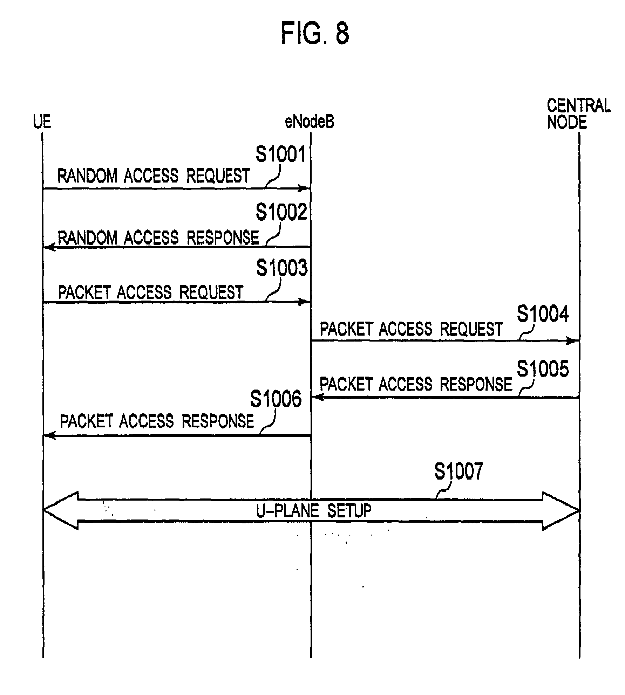

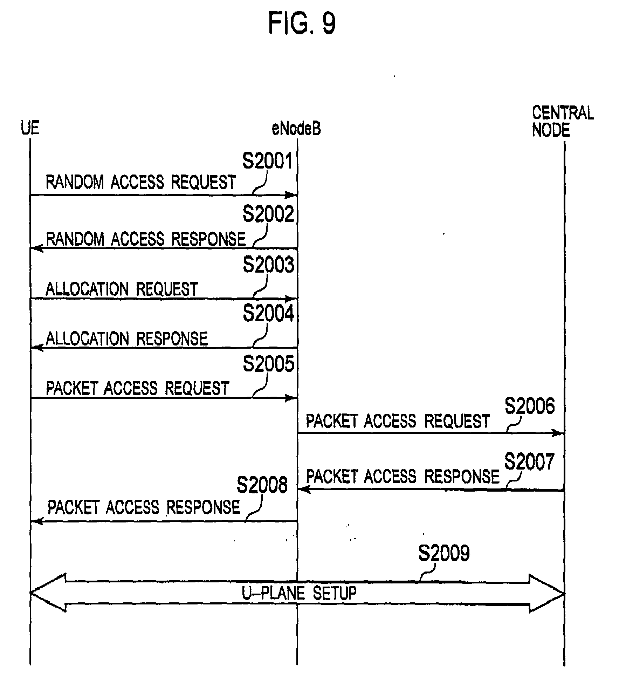

Hereinafter, a random access control operation of the mobile communication system according to the present embodiment will be described with reference to Figs. 8 and 9.

Firstly, a first operation for initiating a packet communication in the mobile communication system according to the present embodiment will be described with reference to Fig. 8.

As shown in Fig. 8, in step S1001, a mobile station UE transmits a random access request, to a radio base station eNodeB through one of RACHs, the RACHs previously notified as being usable,

In step S1002, in response to the receipt of the random access request, the radio base station eNodeB allocates a packet access request transmission radio resource for transmitting the packet access request at the mobile station UE, from among radio resources allocated to the uplink shared channels,

In this regard, the radio base station eNodeB allocates the packet access request transmission radio resource, based on priority information included in the random access request.

Then, the radio base station eNodeB transmits a random access response for notifying the receipt of the random access request, and for notifying the allocated packet access request transmission radio resource, to the mobile station UE through at least one of the downlink shared control channel corresponding to the RACH used for transmitting the random access request, and the downlink shared data channel.

Note that the radio resource allocated to the RACH and to the downlink shared control channel corresponding to the RACH and the downlink shared data channel, may be predetermined.

In step S1003, the mobile station UE transmits a packet access request to the radio base station eNodeB, by using the packet access request transmission radio resource notified by the random access response.

In step S1004, the radio base station eNodeB extracts information to be terminated at the radio base station eNodeB and included in the packet access request. Then, the radio base station eNodeB transfers, to a central node, the packet access request including rest of the information. Here, the radio base station eNodeB performs a predetermined process for initiating the packet, based on the extracted information.

In step S1005, the central node transmits a packet access response for notifying the receipt of the packet access request, to the radio base station eNodeB.

In step S1006, the radio base station eNodeB transfers the packet access response to the mobile station UE.

In step S1007, when the packet access response is received at the mobile station UE, a link between the mobile station and the central node is set for transmitting and receiving user data (U-plane), and a communication is initiated through the link.

Secondly, a second operation of a random access control in the mobile communication system according to the present embodiment will be described with reference to Fig. 9.

As shown in Fig. 9, in step S2001, a mobile station UE transmits, random access request, to a radio base station eNodeB through one of RACHs, the RACHs previously notified as being usable.

In step S2002, the radio base station eNodeB transmits a random access response for notifying the receipt of the random access request, to the mobile station UE through the downlink shared data channel or the downlink shared control channel corresponding to the RACH used for transmitting the random access request.

In step S2003, the mobile station UE determines that the random access response does not include information for specifying a packet access request transmission radio resource, and transmits an allocation request for requesting the radio base station eNodeB to notify the packet access request transmission radio resource.

In step S2004, in response to the allocation request transmitted from the mobile station UE, the radio base station eNodeB allocates the packet access request transmission radio resource for transmitting the packet access request at the mobile station UE, from among the radio resource allocated to the uplink shared channel.

In this regard, the radio base station eNodeB allocates the packet access request transmission radio resource, based on priority information included in the random access request.

Then, the radio base station eNodeB notifies, to the mobile station UE, the packet access request transmission radio resource, by using an allocation response.

Specifically, the radio base station eNodeB transmits, to the mobile station UE, the allocation response including information for specifying the packet access request transmission radio resource.

In step S2005, the mobile station UE transmits a packet access request to the radio base station eNodeB, by using the packet access request transmission radio resource notified by the allocation response.

The operations in steps S2006 to S2009 are similar to the operations in steps S1004 to S1007 in the Fig. 8, and therefore description is omitted.

### (Effects and advantages of the mobile communication system according to the first embodiment of the present Invention)

According to the mobile communication system of the present embodiment, the radio base station eNodeB can transmit a random access response or an allocation response through the downlink shared control channel corresponding to the RACH. Here, the random access and the allocation response are transmitted for notifying the packet access request transmission radio resource in the uplink shared channel in which the packet access request is to be transmitted. This makes it is possible to increase a transmission rate of a message part (a packet access request), and to reduce a time consumed before the initiation of the transmission.

In other words, according to the present invention, the radio base station can notify, to the mobile station UE, the packet access request transmission radio resource to be used by the mobile station UE for transmitting the packet access request, by using the random access response or the allocation response transmitted through at least one of the downlink shared data channel and the downlink shared control channel corresponding to the random access channel. Accordingly, the time consumed before the initiation of the transmission can be reduced.

### Industrial Applicability

As has been described, according to the present invention, it is possible to provide, in an random access control, a packet communication method, a mobile station, and a radio base station, which can increase a transmission rate of a message part (a packet access request), and can reduce a time consumed before an initiation of a transmission.

## Claims

1. A packet communication method, comprising:
transmitting, from a mobile station to a radio base station through a random access channel, a random access request;
allocating, at a radio base station, a packet access request transmission radio resource for transmitting, at the mobile station, a packet access request for requesting an initiation of a packet communication, from among radio resources allocated to uplink shared channels, in response to a receipt of the random access request;
transmitting, at the radio base station, a response for notifying the receipt of the random access request and for notifying the packet access request transmission radio resource, to the mobile station through at least one of a downlink shared data channel and a downlink shared control channel corresponding to the random access channel; and
transmitting, at the mobile station, the packet access request by using the packet access request transmission radio resource notified by the response,

2. The packet communication method according to claim 1, wherein the radio base station is configured to notify, to the mobile station through a broadcast channel, at least one of the random access channel and the downlink shared control channel corresponding to the random access channel.

3. The packet communication method according to claim 2, wherein the radio base station is configured to change at least one of the random access channel to be notified, and the downlink shared control channel corresponding to the random access channel and to be notified, based on a cell, a service class, a purpose, or a reception level.

4. The packet communication method according to any one of claims 1 to 3, wherein the mobile station is configured to change a pattern that constitutes the random access request to be transmitted through the random access channel, based on a cell, a service class, a purpose, or a reception level.

5. A mobile station, comprising:
a random access request transmitter unit configured to transmit a random access request to a radio base station through a random access channel;
a response receiver unit configured to receive, from the radio base station, a response for notifying a receipt of the random access request, and for notifying a packet access request transmission radio resource for transmitting a packet access request for requesting an initiation of a packet communication, through at least one of a downlink shared data channel and a downlink shared control channel corresponding to the random access channel; and
a packet access request transmitter unit configured to transmit the packet access request by using the packet access request transmission radio resource notified by the response received at the response receiver unit.

6. The mobile station according to claim 5, wherein at least one of the random access channel and the downlink shared control channel corresponding to the random access channel is configured to be notified through a broadcast channel transmitted from the radio base station.

7. The mobile station according to any one of claims 5 and 6, wherein the random access request transmitter unit is configured to change the pattern that constitutes the random access request to be transmitted through the random access channel, based on a cell, a service class, a purpose, or a reception level.

8. A radio base station, comprising:
a random access request receiver unit configured to receive a random access request from a mobile station through a random access channel;
an allocation unit configured to allocate, at the mobile station, a packet access request transmission radio resource for transmitting a packet access request for requesting an initiation of a packet communication, from among radio resources allocated to uplink shared channels, in response to a receipt of the random access request; and
a response transmitter unit configured to transmit, to the mobile station, a response for notifying the receipt of the random access request, and for notifying the packet access request transmission radio resource, through at least one of a downlink shared data channel and a downlink shared control channel corresponding to the random access channel.

9. The radio base station according to claim 8, further comprising a notification unit configured to notify, to the mobile station through a broadcast channel, at least one of the random access channel and the downlink shared control channel corresponding to the random access channel.

10. The radio base station according to claim 9, wherein the notification unit is configured to change at least one of the random access channel to be notified and the downlink shared control channel corresponding to the random access channel and to be notified, based on a cell, a service class, a purpose, or a reception level.
